# EUROPÄISCHE PATENTSCHRIFT

(11) **EP 0 664 325 B1**
(45) Veröffentlichungstag und Bekanntmachung des Hinweises auf die Patenterteilung: **28.04.1999**
(21) Anmeldenummer: 95100569.3
(22) Anmeldetag: 17.01.1995
(51) Int. Cl.: C09D 167/02, C09D 5/03

(54) **Wärmehärtbares Beschichtungssystem**
Thermosetting coating composition
Composition de revêtement thermodurcissable

(30) Priorität: 19.01.1994 DE 4401438
(43) Veröffentlichungstag der Anmeldung: 26.07.1995
(73) Patentinhaber: EMS-INVENTA AG, 8001 Zürich (CH)
(72) Erfinder: Kaplan, Andreas, Dr. rer. nat., CH-7000 Chur (CH); Hoppe, Manfred, Dr. rer. nat., CH-7000 Chur (CH); Kinkelin, Eberhard, Dr. rer. nat., CH-7000 Chur (CH)
(74) Vertreter: Becker, Eberhard

(56) Entgegenhaltungen:
- WO-A-91/14745
- FR-A- 2 033 946
- FR-A- 2 339 635
- US-A- 5 006 612

## Beschreibung

Die Erfindung betrifft wärmehärtbare Beschichtungssysteme auf Basis von linearen carboxylfunktionellen Polyester(PES)-Harzen aus bifunktionellen Monomerbausteinen und polyfunktionellen Epoxyverbindungen und/oder β-Hydroxyalkylamiden, deren Herstellung und Verwendung sowie Schutzschichten aus diesen Beschichtungssystemen.

Wärmehärtbare Beschichtungssysteme bestehen im allgemeinen aus Bindemittelharz und Vernetzer, Pigmenten sowie Additiven und/oder Füllstoffen. Die Vernetzung und damit die Härtung in der Wärme erfolgt über Polyadditions- oder Polykondensationsreaktionen zwischen in den Bindemittelsystemen enthaltenden funktionellen Gruppen. Typische Bindemittelsysteme sind Epoxyharze/Härter, Polyester/Epoxide, Polyester/lsocyanate, Polyester/β-Hydroxyalkylamide, Acrylate/lsocyanate.

Die makroskopischen Eigenschaften von gehärteten Pulverlackfilmen verändern sich mit der Zeit. Dieses Phänomen ist bei polymeren Werkstoffen seit längerer Zeit unter dem Begriff physikalische Alterung bekannt (L.C.E. Struik: Physical Aging in Amorphous Polymers and other Materials, Verlag Elsevier, 1978).

Unter physikalischer Alterung versteht man die zeitliche Veränderung der markoskopischen Eigenschaften von Polymeren im Glaszustand bei konstanten Umgebungsbedingungen, hervorgerufen durch einen Nicht-Gleichgewichtszustand im Polymeren. Im Unterschied zur chemischen Alterung, bei der irreversible Änderungen wie Abbaureaktionen oder Kettenbrüche, hervorgerufen durch thermischen Abbau oder Photooxidation, im Material auftreten, ist die physikalische Alterung reversibel.

Als Beispiele für Veränderungen durch physikalische Alterung seien Veränderungen der elektrischen und optischen Kenngrößen, sowie Veränderungen der mechanischen Eigenschaften genannt, welche für Lackfilme am wichtigsten sind. Obwohl bei Lackfilmen allgemein bekannt, schien dieses Phänomen bisher keine allzugroßen Probleme zu bereiten.

Durch den vermehrten Einsatz von organischen Pigmenten und die hohen Anforderungen an Pulverbeschichtungen in der Precoating Metal- und Coil-Coating-Technologie, insbesondere wenn die beschichteten Teile nachträglich verformt werden, gewinnt dieses Phänomen und die Mittel zu dessen Beseitigung an Interesse. Ein anderes interessantes Anwendungsgebiet für Pulverlacke mit verbesserter Beständigkeit gegenüber physikalischer Alterung sind Transparentlacke als Schutzschichten gegen Rissbildung.

L.C.E. Struik beschreibt in dem vorgenannten Buch "Physical Aging in Amorphous Polymers and other Materials" das Phänomen der physikalischen Alterung allgemein anhand von Polymeren. Bisher gibt es nur wenige Literaturstellen, die sich mit dem Phänomen der physikalischen Alterung von organischen Beschichtungen oder im speziellen Pulverlacken befassen (P.J. Greidanus, Proc. 19^{th} Fatipec Congress, Aachen, 1, 485 (1988) und D.Y. Perera and P. Schutyser: Effect of Physical Aging on Thermal Stress Development in Powder Coatings, XIX International Conference in Organic Coating Science and Technology, Athen, 1993). In diesen Publikationen werden nur die physikalischen Grundlagen und die Auswirkungen der physikalischen Alterung gemessen und beschrieben, jedoch wird keine Lösung dieses Problems vorgeschlagen.

Bei Pulverlacken auf Basis von carboxylfunktionellen Polyestern und Polyepoxiden und/oder β-Hydroxyalkylamiden als Vernetzer, kann das Phänomen der physikalischen Alterung zurückgedrängt werden durch Erhöhung der Einbrenntemperatur, durch Verlängerung der Einbrennzeit, durch einen Überschuß an Vernetzer oder durch den Einbau von sogenannten Verzweigern, d.h. Säuren oder Alkoholen mit einer Funktionalität größer 2, in das zugrundeliegende Polyesterharz. Eine Erhöhung der Einbrenntemperatur oder eine Verlängerung der Einbrennzeit ist mit höherem Energieverbrauch und teilweise mit Farbveränderungen verbunden. Ein Überschuß an Vernetzer ist ebenfalls aus ökonomischer Sicht abzulehnen und mit höheren Kosten verbunden. Der Einbau von Verzweigern in das Polyesterharz ist aus technischer Sicht nicht zu empfehlen, da er mit einer Verschlechterung der Verlaufseigenschaften verbunden ist.

US-A-5 006 612 beschreibt einen linearen, Carboxylgruppen enthaltenden Polyester mit Carboxylfunktionalitäten zur Vernetzung mit Epoxid-funktionalisierten Vernetzern. Das Polyesterharz ist das Reaktionsprodukt aus Terephthalsäure und/oder Isophthalsäure und Neopentylglykol und/oder Cyclohexandimethanol mit Hydroxyl-Werten im Bereich von etwa 60 bis etwa 100. Das Verhalten dieses Polyesters hinsichtlich der physikalischen Alterung wird nicht beschrieben.

WO-A-91/14745 beschreibt eine wärmehärtbare Pulverbeschichtungszusammensetzung mit Carboxylfuntionalitäten aus z.B. Terephthalsäure und/oder Isophthalsäureenthaltenden Polyestern, wobei β-Hydroxyalkylamide als Vernetzungsreagentien verwendet werden. Die Auswirkungen dieser Zusammensetzung auf die physikalische Alterung werden auch in dieser Druckschrift nicht erwähnt.

Die der Erfindung zugrundeliegende Aufgabe ist somit die Überwindung der vorgenannten Nachteile des Standes der Technik, d.h. es sollen daher wärmehärtbare Beschichtungssysteme mit verzweigerfreien Polyesterharzen bereitgestellt werden.

Diese Aufgabe wird durch das wärmehärtbare Beschichtungssystem gemäß Anspruch 1, das Verfahren gemäß Anspruch 12, die Verwendung nach Anspruch 13 sowie durch die Schutzschicht nach Anspruch 14 gelöst.

In den Unteransprüchen sind vorteilhafte Ausführungsformen der Erfindung enthalten. Die Aufgabe wird speziell gelöst durch ein Beschichtungssystem aus linearen carboxylfunktionellen Polyesterharzen aus bifunktionellen Monomerbausteinen und Vernetzer, wobei die Isophthalsäure maximal 10 Mol-Teile aller Säurebausteine ausmacht.

Es wurde festgestellt, daß überraschenderweise bei Pulverlacken auf Basis linearer carboxylfunktioneller Polyester, d.h. solchen, bei denen die Funktionalität der verwendeten Säuren und Alkoholen kleiner oder gleich 2 ist, und polyfunktionellen Epoxyden und/oder β-Hydroxyalkylamiden als Vernetzer oder Härter eine deutliche Verbesserung der Beständigkeit gegenüber der physikalischen Alterung erreicht werden kann.

Das erfindungsgemäße wärmehärtbare Beschichtungssystem besteht somit aus einem spezifischen gesättigten Polyester als Bindemittelharz, welcher sich dadurch in besonderer Weise auszeichnet, daß er aus bifunktionellen aliphatischen und/odercycloaliphatischen Diolen und aliphatischen und/oder cycloaliphatischen und/oder aromatischen Dicarbonsäuren aufgebaut ist, wobei die Menge an Isophthalsäure kleiner als 10 Mol-Teile, bezogen auf die gesamte Säuremenge ist.

Das carboxylfunktionelle Polyesterharz enthält minimal 90 Mol-Teile anderer aromatischer, aliphatischer oder cycloaliphatischer Dicarbonsäuren, wobei Terephthalsäure als aromatische Dicarbonsäure, Adipinsäure, Azelainsäure, Sebazinsäure und Dodecandicarbonsäure als aliphatische oder Cyclohexandicarbonsäure als cycloaliphatische Dicarbonsäure bevorzugt sind. In einer bevorzugten Ausführungsform sind die Polyesterharze, neben Terephthalsäure, d.h. allgemein neben den aromatischen Dicarbonsäuren, aus 3 bis 9 Mol-Teilen aliphatischer Dicarbonsäuren mit mindestens 6 C-Atomen, wobei Adipinsäure besonders bevorzugt ist, und/oder 3 bis 9 Mol-Teilen cycloaliphatischer Dicarbonsäure, wobei 1 ,4-Cyclohexandicarbonsäure besonders bevorzugt ist, aufgebaut.

Die Diole des Polyesterharzes bestehen zu mindestens 50 Mol-Teilen aus mindestens einem verzweigten aliphatischen Diol mit 4 bis 12 C-Atomen sowie zu maximal 50 Mol-Teilen aus mindestens einem linearen aliphatischen Diol mit 2 bis 22 C-Atomen und mindestens einem cycloaliphatischen Diol mit 6 bis 16 C-Atomen, wobei als verzweigtes Diol 2,2-Dimethyl-1,3-propandiol bevorzugt ist.

Als Vernetzerkomponete eignen sich Epoxyverbindungen mit mindestens 2 Epoxygruppen und/oder β-Hydroxyalkylamide mit mindestens 2 Hydroxyalkylamidgruppen. Bevorzugte monomere Polyepoxyverbindungen sind Glycidylether der Cyanur- oder der Isocyanursäure oder Glycidylester von Polycarbonsäuren. Dabei sind Terephthalsäure, Trimellithsäure oder Mischungen davon bevorzugt. Besonders bevorzugt ist Trisglycidylisocyanurat (TGIC). Als β-Hydroxyalkylamidverbindung eignet sich Bis[N,N'-di(β-hydroxyethyl]adipamid (Primid XL 552 der Firma Rohm and Haas) in besonderer Weise.

In einer bevorzugten Ausführungsform des Beschichtungssystems hat das Polyesterharz eine Säurezahl von 15 bis 100 [mg KOH/g], eine OH-Zahl von maximal 10 [mg KOH/g] und eine Glasumwandlungstemperatur T_{g} von größer als 45 °C.

Im erfindungsgemäßen Beschichtungssystem können die für die Herstellung und die Verwendung von Pulverlacken üblichen Additive zusätzlich vorhanden sein.

Dabei handelt es sich um Additive aus der Gruppe Beschleuniger, Pigmente, Füllstoffe, Verlauf- und Entgasungsmittel, Hitze-, UV- und/oder HALS-Stabilisatoren oder Triboadditive sowie erforderlichenfalls um Mattierungsadditive, wie z.B. Wachse.

Die Herstellung der erfindungsgemäßen carboxylfunktionellen Polyesterharze erfolgt nach bekannter Art durch gemeinsames Erhitzen sämtlicher monomeren Komponenten in Anwesenheit üblicher Veresterungskatalysatoren auf eine Temperatur bis ca 250 °C und Abtrennen des entstandenen Reaktionswassers oder nach einem zweistufigen Verfahren, bei welchem in einer ersten Stufe in Gegenwart eines Polyolüberschusses ein hydroxylfunktioneller Polyester gebildet wird und in einer zweiten Stufe dieser mit einer oder mehreren mehrbasischen Carbonsäuren oder deren Anhydride zu einem carboxylfunktionellen Polyesterharz umgesetzt wird.

Die Herstellung der erfindungsgemäßen Pulverlacke erfolgt vorzugsweise in der Schmelze durch gemeinsame Extrusion sämtlicher Formulierungsbestandteile bei Temperaturen zwischen 90 bis 130 °C. Das Extrudat wird anschließend abgekühlt, gemahlen und auf eine Korngröße kleiner als 100 µm abgesiebt. Grundsätzlich sind auch andere Verfahren zur Herstellung der Pulverlacke geeignet, wie z.B. Vermischen der Formulierungsbestandteile in Lösung und anschließende Ausfällung oder destillative Entfernung der Lösemittel.

Die Applikation der erfindungsgemäßen Pulverlacke erfolgt nach den für Pulverlacke üblichen Verfahren z.B. mittels elektrostatischen Sprühvorrichtungen z.B. nach dem Corona- oder dem Tribo-System oder nach dem Wirbelbett-Verfahren.

Die nach der vorliegenden Erfindung vorgeschlagenen Pulverlacke sind genügend lagerstabil und besitzen nach der Vernetzung bei 140 bis 200 °C sehr gute Verlauf- und mechanische Eigenschaften. Sie zeichnen sich weiter durch gute Witterungs- und UVB-Beständigkeit und besonders gute Alterungsbeständigkeit aus. Die Herstellung und die Eigenschaften der carboxylfunktionellen, spezifischen Polyesterharze sowie der Pulverlacke werden nachfolgend beispielhaft dargestellt.

### Herstellung der carboxylfunktionellen Polyesterharze

### Vergleichsbeispiel

In einen 2-l-Veresterungsreaktor, versehen mit Temperaturfühler, Rührer, Rückflußkolonne und Destillationsbrücke, werden 391,8 g (3,76 Mol) 2,2-Dimethyl-1,3-propanol und 27,5 g (0,44 Mol) Ethylenglykol vorgelegt und bei 140 °C unter einer, während der ganzen Reaktion aufrechterhaltenen inerten Stickstoffatmosphäre aufgeschmolzen.

Unter Rühren werden 515,5 g (3,10 Mol) Terephthalsäure, 110,5 g (0,67 Mol) Isophthalsäure und 0,1 g eines Sn-haltigen Veresterungskatalysators zugegeben und die Innentemperatur wird schrittweise auf 235 °C erhöht. Die Reaktion wird fortgesetzt bis kein Destillat mehr entsteht und die Säurezahl weniger als 10 mg KOH/g beträgt.

Danach werden 73,6 g (0,44 Mol) Isophthalsäure und 32,4 g (0,22 Mol) Adipinsäure zugegeben, und die Veresterung wird bis zum Erreichen der gewünschten Säurezahl von ca. 33 mg KOH/g fortgesetzt. Ein Teil dieser 2. Stufe wird unter vermindertem Druck (< 100 mbar) durchgeführt.

### Beispiel 1

Analog zu dem Vergleichsbeispiel werden 352,9 g (3,39 Mol) 2,2-Dimethyl-1,3-propandiol und 56,2 g (0,91 Mol) Ethylenglykol aufgeschmolzen.

Unter Rühren werden 639,3 g (3,85 Mol) Terephthalsäure und 0,1 g eines Sn-haltigen Veresterungskatalysators zugegeben. Die Reaktion wird fortgesetzt bis kein Destillat mehr entsteht, und die Säurezahl weniger als 10 mg KOH/g beträgt.

Danach werden 56,4 g (0,34 Mol) Isophthalsäure und 49,6 g (0,34 Mol) Adipinsäure zugegeben, und die Veresterung wird bis zum Erreichen der gewünschten Säurezahl von ca. 33 mg KOH/g fortgesetzt.

### Beispiel 2

Analog zu dem Vergleichsbeispiel werden 347,8 g (3,34 Mol) 2,2-Dimethyl-1,3-propandiol und 55,4 g (0,89 Mol) Ethylenglykol aufgeschmolzen.

Unter Rühren werden 630 g (3,79 Mol) Terephthalsäure und 0,1 g eines Sn-haltigen Veresterungskatalysators zugegeben. Die Reaktion wird fortgesetzt bis kein Destillat mehr entsteht, und die Säurezahl weniger als 10 mg KOH/g beträgt.

Danach werden 37,1 g (0,22 Mol) Isophthalsäure und 32,6 g (0,22 Mol) Adipinsäure und 38,4 g (0,22 Mol) Cyclohexandicarbonsäure zugegeben, und die Veresterung wird bis zum Erreichen der gewünschten Säurezahl von ca. 33 mg KOH/g fortgesetzt.

### Beispiel 3

Analog zu dem Vergleichsbeispiel werden 366,7 g (3,52 Mol) 2,2-Dimethyl-1,3-propandiol und 55,7 g (0,90 Mol) Ethylenglykol aufgeschmolzen.

Unter Rühren werden 633,7 g (3,82 Mol) Terephthalsäure und 0,1 g eines Sn-haltigen Veresterungskatalysators zugegeben. Die Reaktion wird fortgesetzt bis kein Destillat mehr entsteht, und die Säurezahl weniger als 10 mg KOH/g beträgt.

Danach werden 55,9 g (0,34 Mol) Isophthalsäure und 49,2 g (0,34 Mol) Adipinsäure zugegeben, und die Veresterung wird bis zum Erreichen der gewünschten Säurezahl von ca. 22 mg KOH/g fortgesetzt.

### Beispiel 4

Analog zu dem Vergleichsbeispiel werden 364,5 g (3,50 Mol) 2,2-Dimethyl-1,3-propandiol und 55,4 g (0,89 Mol) Ethylenglykol aufgeschmolzen.

Unter Rühren werden 630 g (3,79 Mol) Terephthalsäure und 0,1 g eines Sn-haltigen Veresterungskatalysators zugegeben. Die Reaktion wird fortgesetzt bis kein Destillat mehr entsteht, und die Säurezahl weniger als 10 mg KOH/g beträgt.

Danach werden 37,1 g (0,22 Mol) Isophthalsäure, 32,6 g (0,22 Mol) Adipinsäure und 38,4 g (0,22 Mol) Cyclohexandicarbonsäure zugegeben, und die Veresterung wird bis zum Erreichen der gewünschten Säurezahl von ca. 22 mg KOH/g fortgesetzt.

### Herstellung der Pulverlacke

Für sämtliche in Tabelle 1 beschriebenen Pulverlacke wurde die nachfolgende Formulierung verwendet. Bei den Pulverlacken in Tabelle 2 wurde noch zusätzlich DT 3126 der Firma Ciba Geigy als Beschleuniger verwendet.

| Gewichtsteile | |
|---|---|
| 948 | Bindemittel |
| 15 | Resiflow PV 88 ¹⁾ |
| 7 | Benzoin |
| 30 | Organisches Pigment |

| | |
|---|---|
| ¹⁾ Verlaufmittel auf Polyacrylat-Basis, Handelsprodukt der Firma Worleè-Chemie GmbH | |

Die Formulierungsbestandteile werden in einem Henschel-Mischer bei 700 Upm während 30 Sekunden trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die lacktechnischen Prüfungen erfolgen auf Aluminiumblechen (Q-panel AL-36 5005 H 14/08 (0,8 mm)) bei einer Einbrenntemperatur von 180 °C und einer Einbrennzeit von 10 Minuten. Die Lackfilmdicke beträgt ca. 90 µm.

Tabelle 1 zeigt die zeitlichen Veränderungen des Impacts als Testkriterium für die physikalische Alterung nach der Lagerung im Klimaraum bei 23 °C und 50 % relativer Luftfeuchtigkeit.

Tabelle 2 zeigt die zeitlichen Veränderungen des Impacts als Testkriterium für die physikalische Alterung nach der Lagerung im Trockenschrank bei 50 °C.

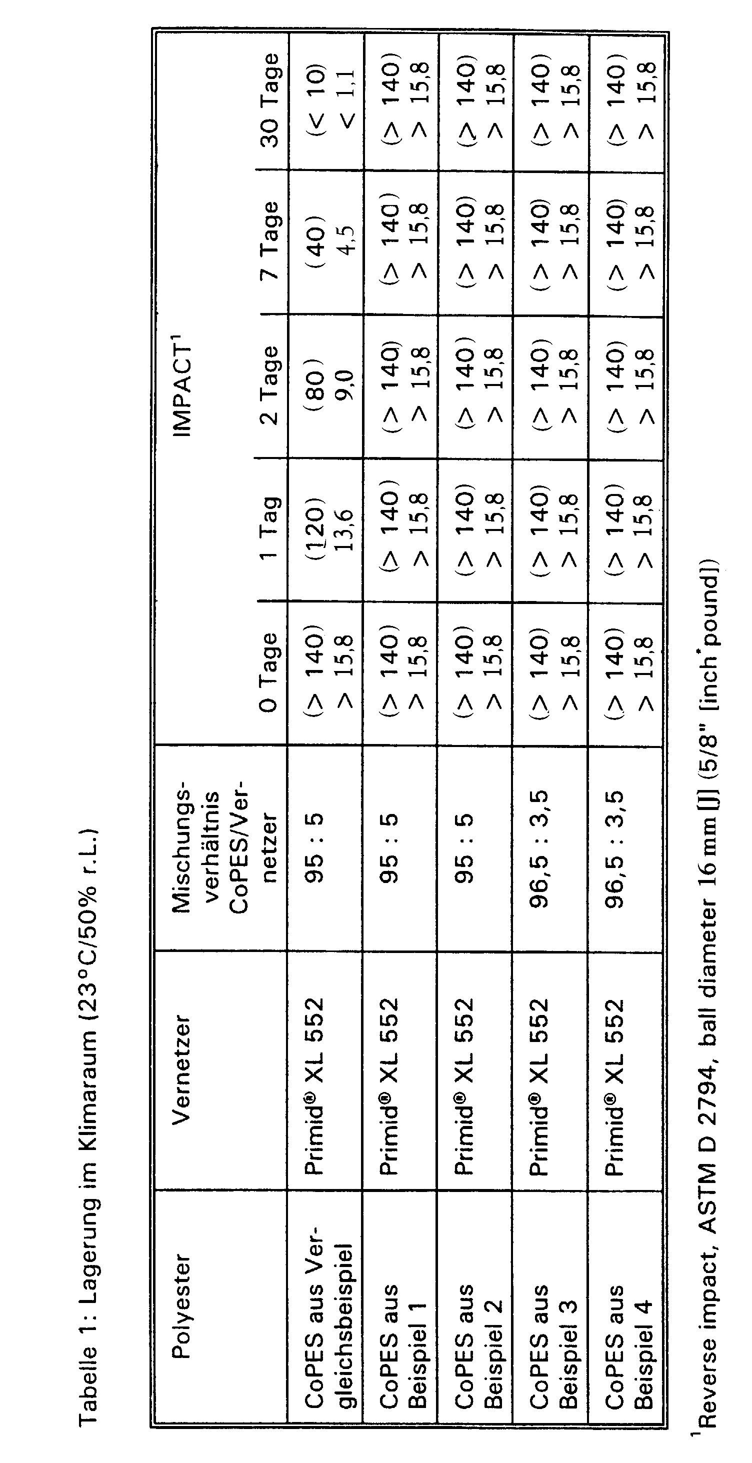

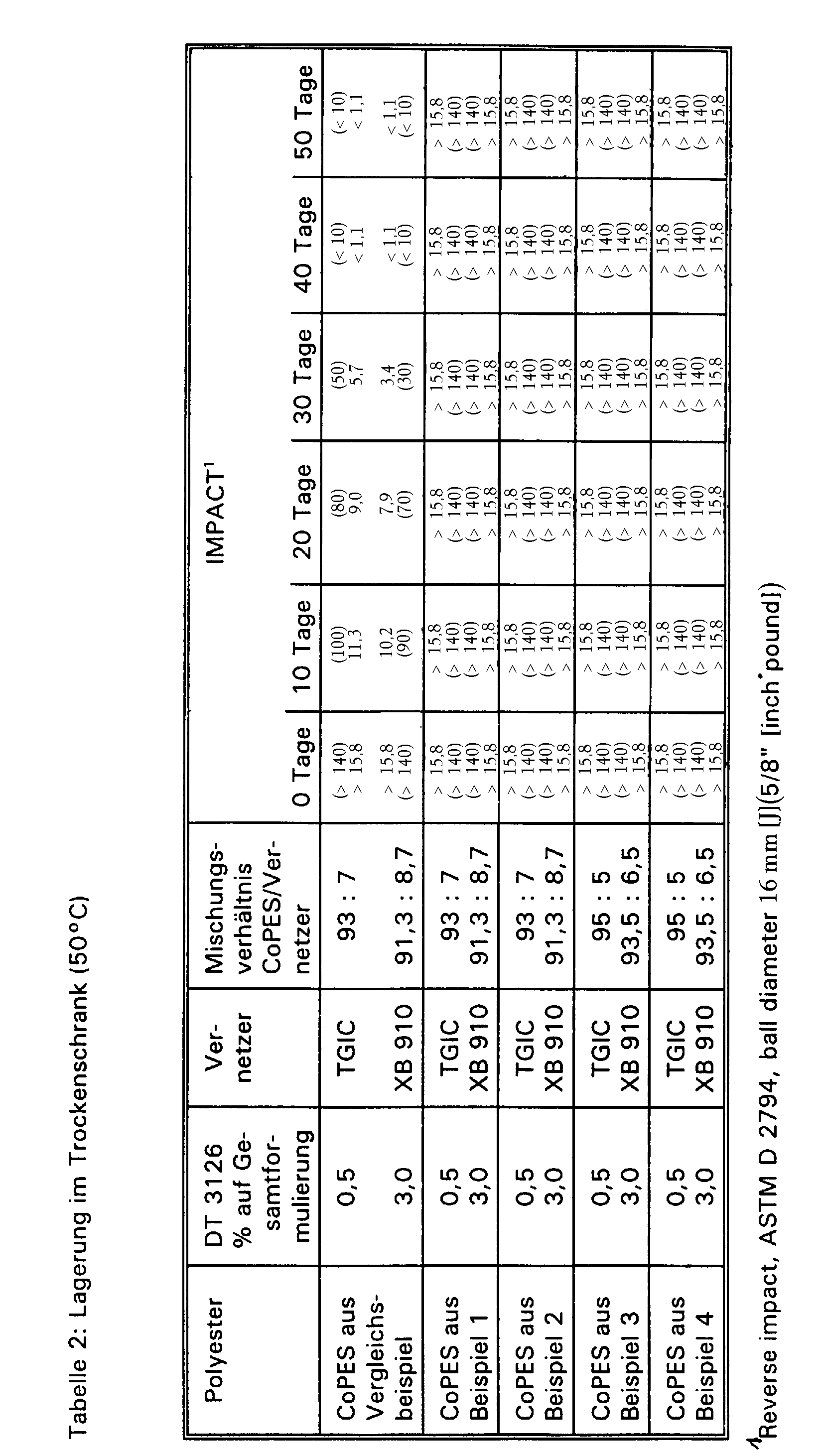

## Patentansprüche

1. Wärmehärtbares Beschichtungssystem auf Basis von carboxylfunktionellen Polyester-Harzen, polyfunktionellen Epoxyverbindungen und/oder β-Hydroxyalkylamiden als Vernetzer sowie gegebenenfalls weiteren üblichen Additiven, dadurch gekennzeichnet, daß das Beschichtungssystem als Bindemittelharz mindestens ein lineares carboxylfunktionelles Polyesterharz aus bifunktionellen Monomerbausteinen aus
- maximal 10 Mol-Teilen Isophthalsäure und
- mindestens 90 Mol-Teilen mindestens einer weiteren Dicarbonsäure aus der Gruppe aromatische Dicarbonsäuren mit 8 bis 16 C-Atomen, aliphatische Dicarbonsäuren mit 6 bis 22 C-Atomen und cycloaliphatische Dicarbonsäuren mit 8 bis 16 C-Atomen, und
- mindestens 50 Mol-Teilen mindestens eines verzweigten aliphatischen Diols mit 4 bis 12 C-Atomen und
- maximal 50 Mol-Teilen mindestens eines linearen aliphatischen Diols mit 2 bis 22 C-Atomen und/oder mindestens eines cycloaliphatischen Diols mit 6 bis 16 C-Atomen,
enthält.

2. Beschichtungssystem nach Anspruch 1, dadurch gekennzeichnet, daß die Additive aus der Gruppe Beschleuniger, Pigmente, Füllstoffe, Verlaufsstoffe, Entgasungsmittel, Hitze-, UV-, Stabilisatoren, Mattierungs- und Tribo-Additive ausgewählt sind.

3. Beschichtungssystem nach Anspruch 1, dadurch gekennzeichnet, daß der Vernetzer eine monomere Epoxyverbindung ist.

4. Beschichtungssystem nach Anspruch 3, dadurch gekennzeichnet, daß der Vernetzer ein Glycidylester einer Polycarbonsäure ist.

5. Beschichtungssystem nach Anspruch 3, dadurch gekennzeichnet, daß der Vernetzer ein Glycidylether der Cyanursäure oder Isocyanursäure ist.

6. Beschichtungssystem nach Anspruch 4, dadurch gekennzeichnet, daß die Polycarbonsäure Trimellithsäure oder Terephthalsäure ist.

7. Beschichtungssystem nach Anspruch 1, dadurch gekennzeichnet, daß der Vernetzer ein β-Hydroxyalkylamid mit mindestens zwei Hydroxyalkylamidgruppen ist.

8. Beschichtungssystem nach Anspruch 1, dadurch gekennzeichnet, daß das verzweigte aliphatische Diol 2,2-Dimethyl-1,3-propandiol ist.

9. Beschichtungssystem nach Anspruch 1, dadurch gekennzeichnet, daß die Dicarbonsäure ausgewählt ist aus der Gruppe Terephthalsäure, Adipinsäure, Azelainsäure, Sebazinsäure, Dodecandicarbonsäure oder Cyclohexandicarbonsäure.

10. Beschichtungssystem nach einem der vorhergehenden Ansprüche, dadurch gekennzeichnet, daß der Anteil der aliphatischen Dicarbonsäure und/oder der cycloaliphatischen Dicarbonsäure, neben den aromatischen Dicarbonsäuren, 3 bis 9 Mol-Teile beträgt.

11. Beschichtungssystem nach einem der vorhergehenden Ansprüche, dadurch gekennzeichnet, daß das carboxylfunktionelle Polyesterharz eine Säurezahl von 15 bis 100 mg KOH/g und eine OH-Zahl von maximal 10 mg KOH/g sowie eine Glasumwandlungstemperatur von größer als 45 °C hat.

12. Verfahren zur Herstellung von wärmehärtbaren Beschichtungssystemen auf Basis von linearen carboxylfunktionellen Polyesterharzen aus bifunktionellen Monomerbausteinen, dadurch gekennzeichnet, daß das Bindemittelharz, der mindestens eine Vernetzer aus der Gruppe polyfunktionelle Epoxyverbindungen und β-Hydroxyalkylamide und gegebenenfalls weitere übliche Additive nach den Ansprüchen 1 bis 11 in der Schmelze bei 90 bis 130 °C gemischt, extrudiert, ausgetragen, granuliert, gemahlen und auf eine Korngröße von kleiner als 100 µm abgesiebt werden.

13. Verwendung des wärmehärtbaren Beschichtungssystems gemäß den Ansprüchen 1 bis 11 zur Herstellung von Überzügen bzw. Schutzschichten durch Wirbelsintern, elektrostatisches Beschichten.

14. Schutzschicht herstellbar aus dem Beschichtungssystem gemäß den Ansprüchen 1 bis 11.

## Claims

1. Heat-curable coating system based on carboxyl-functional polyester resins, polyfunctional epoxy compounds and/or β-hydroxyalkylamides as crosslinkers together if desired with further customary additives, characterized in that the coating system comprises as binder resin at least one linear carboxyl-functional polyester resin comprising bifunctional monomer units of
- not more than 10 molar parts of isophthalic acid and
- at least 90 molar parts of at least one further dicarboxylic acid from the group of aromatic dicarboxylic acids having 8 to 16 carbon atoms, aliphatic dicarboxylic acids having 6 to 22 carbon atoms and cycloaliphatic dicarboxylic acids having 8 to 16 carbon atoms, and
- at least 50 molar parts of at least one branched aliphatic diol having 4 to 12 carbon atoms and
- not more than 50 molar parts of at least one linear aliphatic diol having 2 to 22 carbon atoms and/or at least one cycloaliphatic diol having 6 to 16 carbon atoms.

2. Coating system according to Claim 1, characterized in that the additives are selected from the group consisting of accelerators, pigments, fillers, levelling materials, degassing agents, heat stabilizers, UV stabilizers, matting additives and triboadditives.

3. Coating system according to Claim 1, characterized in that the crosslinker is a monomeric epoxy compound.

4. Coating system according to Claim 3, characterized in that the crosslinker is a glycidyl ester of a polycarboxylic acid.

5. Coating system according to Claim 3, characterized in that the crosslinker is a glycidyl ether of cyanuric acid or isocyanuric acid.

6. Coating system according to Claim 4, characterized in that the polycarboxylic acid is trimellitic acid or terephthalic acid.

7. Coating system according to Claim 1, characterized in that the crosslinker is a β-hydroxyalkylamide having at least two hydroxyalkylamide groups.

8. Coating system according to Claim 1, characterized in that the branched aliphatic diol is 2,2-dimethyl-1,3-propanediol.

9. Coating system according to Claim 1, characterized in that the dicarboxylic acid is selected from the group consisting of terephthalic acid, adipic acid, azelaic acid, sebacic acid, dodecanedicarboxylic acid and cyclohexanedicarboxylic acid.

10. Coating system according to one of the preceding claims, characterized in that the proportion of the aliphatic dicarboxylic acid and/or of the cycloaliphatic dicarboxylic acid, besides the aromatic dicarboxylic acids, is from 3 to 9 molar parts.

11. Coating system according to one of the preceding claims, characterized in that the carboxyl-functional polyester resin has an acid number of from 15 to 100 mg of KOH/g and an OH number of not more than 10 mg of KOH/g and also a glass transition temperature of more than 45°C.

12. Process for preparing heat-curable coating systems based on linear carboxyl-functional polyester resins comprising bifunctional monomer units, characterized in that the binder resin, the at least one crosslinker from the group of polyfunctional epoxy compounds and β-hydroxyalkylamides, and, if present, further customary additives according to Claims 1 to 11 are mixed in the melt at from 90 to 130°C, extruded, discharged, granulated, ground and screened to a particle size of less than 100 µm.

13. Use of the heat-curable coating system according to Claims 1 to 11 for producing coatings and/or protective layers by means of fluidized-bed sintering, electrostatic coating.

14. Protective coat which can be prepared from the coating system according to Claims 1 to 11.

## Revendications

1. Composition de revêtement thermodurcissable à base de résines polyesters à groupes fonctionnels carboxyle, de composés époxy polyfonctionnels et/ou de β-hydroxyalkylamides comme agents de réticulation ainsi que, le cas échéant, d'autres additifs classiques, composition de revêtement caractérisée en ce qu'elle contient comme résine servant de liant au moins une résine polyester linéaire à groupes fonctionnels carboxyle, formée de motifs monomères bifonctionnels
- de 10 parties molaires au maximum d'acide isophtalique et
- d'au moins 90 parties molaires d'au moins un autre acide dicarboxylique du groupe d'acides dicarboxyliques aromatiques de 8 à 16 atomes de carbone, d'acides dicarboxyliques aliphatiques de 6 à 22 atomes de carbone et d'acides dicarboxyliques cycloaliphatiques de 8 à 16 atomes de carbone, et
- d'au moins 50 parties molaires d'au moins un diol aliphatique ramifié ayant 4 à 12 atomes de carbone et
- de 50 parties molaires au maximum d'au moins un diol aliphatique linéaire ayant 2 à 22 atomes de carbone et/ou d'au moins un diol cycloaliphatique ayant 6 à 16 atomes de carbone.

2. Composition de revêtement suivant la revendication 1, caractérisée en ce que les additifs sont choisis dans le groupe des accélérateurs, des pigments, des charges, des agents d'écoulement, des agents de dégazage, des agents de stabilisation à la chaleur et aux rayons ultraviolets, des additifs de matité et des tribo-additifs.

3. Composition de revêtement suivant la revendication 1, caractérisée en ce que l'agent de réticulation est un composé époxy monomère.

4. Composition de revêtement suivant la revendication 3, caractérisée en ce que l'agent de réticulation est un ester de glycidyle d'un acide polycarboxylique.

5. Composition de revêtement suivant la revendication 3, caractérisée en ce que l'agent de réticulation est un éther de glycidyle d'acide cyanurique ou d'acide isocyanurique.

6. Composition de revêtement suivant la revendication 4, caractérisée en ce que l'acide polycarboxylique est l'acide trimellitique ou l'acide téréphtalique.

7. Composition de revêtement suivant la revendication 1, caractérisée en ce que l'agent de réticulation est un β-hydroxyalkylamide portant au moins deux groupes hydroxyalkylamides.

8. Composition de revêtement suivant la revendication 1, caractérisée en ce que le diol aliphatique ramifié est le 2,2-diméthyl-1,3-propanediol.

9. Composition de revêtement suivant la revendication 1, caractérisée en ce que l'acide dicarboxylique est choisi dans le groupe comprenant l'acide téréphtalique, l'acide adipique, l'acide azélaïque, l'acide sébacique, l'acide dodécane-dicarboxylique ou l'acide cyclohexane-dicarboxylique.

10. Composition de revêtement suivant l'une des revendications précédentes, caractérisée en ce que la proportion d'acide dicarboxylique aliphatique et/ou d'acide dicarboxylique cycloaliphatique, à côté des acides dicarboxyliques aromatiques, s'élève à 3 à 9 parties molaires.

11. Composition de revêtement suivant l'une des revendications précédentes, caractérisée en ce que la résine polyester portant des groupes fonctionnels carboxyle a un indice d'acide de 15 à 100 mg de KOH/g et un indice d'hydroxyle au maximum égal à 10 mg de KOH/g ainsi qu'une température de transition vitreuse supérieure à 45°C.

12. Procédé de production de compositions de revêtement thermodurcissables à base de résines polyesters linéaires portant des groupes fonctionnels carboxyle, formées de motifs monomères bifonctionnels, caractérisé en ce que la résine servant de liant, le ou les agents de réticulation du groupe de composés époxy polyfonctionnels et de β-hydroxyalkylamides et, le cas échéant, d'autres additifs classiques selon les revendications 1 à 11, sont mélangés à l'état fondu à une température de 90 à 130°C, extrudés, déchargés, granulés, broyés et tamisés à un diamètre de grains inférieur à 100 µm.

13. Utilisation de la composition de revêtement thermodurcissable suivant les revendications 1 à 11 pour la production de revêtements ou de couches de protection par enduction électrostatique en lit fluidisé.

14. Couche de protection pouvant être produite à partir de la composition de revêtement suivant les revendications 1 à 11.
